# EUROPEAN PATENT SPECIFICATION

(11) **EP 2 128 234 B1**
(45) Date of publication and mention of the grant of the patent: **16.03.2011**
(21) Application number: 08702915.3
(22) Date of filing: 07.01.2008
(51) Int. Cl.: C11B 5/00, A23L 1/30, C09K 15/06

(54) **PHARMACEUTICAL PREPARATIONS CONTAINING FATTY ACID ESTERS OF L-ASCORBIC ACID**
PHARMAZEUTISCHE ZUBEREITUNGEN, DIE FETTSÄUREESTER VON L-ASCORBINSÄURE ENTHALTEN
PRÉPARATION PHARMACEUTIQUE CONTENANT DES ESTERS D'ACIDE GRAS DE L'ACIDE L-ASCORBIQUE

(30) Priority: 09.01.2007 JP 2007001828
(43) Date of publication of application: 02.12.2009
(73) Proprietor: RIKEN VITAMIN CO., LTD., Chiyoda-ku, Tokyo 101-8370 (JP)
(72) Inventor: KONDO, Kazuyoshi, Chiba-shi Chiba 261-0002 (JP); SHIBATA, Tsuyoshi, Chiba-shi Chiba 261-0002 (JP)
(74) Representative: Teipel, Stephan
(86) International application number: PCT/JP2008/050034
(87) International publication number: WO 2008/084773

(56) References cited:
- JP-A- 10 179 086
- JP-A- 2002 238 500
- JP-A- 2002 291 442
- JP-A- 2003 306 692
- JP-A- 2005 218 403
- US-A1- 2005 123 667

## Description

### TECHNICAL FIELD

The present invention relates to an L-ascorbyl fatty acid ester-containing preparation.

### BACKGROUND ART

L-ascorbyl fatty acid esters are compounds where an L-ascorbic acid is esterified with a fatty acid. L-ascorbyl fatty acid esters have vitamin-C's effect and antioxidant effect as well as are lipophilic, and therefore are used as a nutritional enrichment ingredient, an antioxidant or the like in oil and/or fat or in fat-containing food. Due to their high melting point and extremely low solubility in oil, L-ascorbyl fatty acid esters, however, have been used to a limited extent.

In order to solve this problem, the following means have been proposed:
a method which involves producing a preparation from a homogeneous mixture of a tocopherol and vitamin-C stearate, and then admixing the preparation with oily food material (JP-A 49-85252);
a method which involves dissolving an L-ascorbyl fatty acid ester in lecithin and then dissolving the resulting mixture in oil (JP-A 55-56193);
a method which involves dissolving, in oil, a preparation comprising L-ascorbyl palmitate, lecithin paste and a medium-chain triglyceride (JP-A 6-336443 (Example 1));
a method which involves dissolving, in oil, a preparation comprising L-ascorbyl palmitate, a tocopherol and diglycerol monooleate (JP-A 9-65864 (Example 5));
a method which involves dissolving, in oil, a preparation comprising L-ascorbyl palmitate, sucrose palmitate and rapeseed oil (JP-A 9-208986 (Example 1)); and
a composition comprising an L-ascorbyl fatty acid ester, a polyglycerol unsaturated fatty acid ester, a polyglycerol condensed ricinoleate, and oil and/or a tocopherol (JP-A 2005-314519).

However, the aforementioned composition and preparations have disadvantages that they contain crystals of L-ascorbyl fatty acid ester or that white turbidity, precipitates and the like will be produced with time after their production. Particularly, their preservation stability is not necessarily satisfying from a practical viewpoint.

### DISCLOSURE OF THE INVENTION

### PROBLEM TO BE SOLVED BY THE INVENTION

An object of the present invention is to provide an L-ascorbyl fatty acid ester-containing preparation which is a clear liquid and is free from any white turbidity, precipitate or the like even during its long-term storage at room temperature (about 0 to 30°C).

### MEANS FOR SOLVING THE PROBLEM

The present inventors conducted extensive research to achieve the above-mentioned object. As a result, they found that the objective L-ascorbyl fatty acid ester-containing preparation can be obtained by dissolving an L-ascorbyl fatty acid ester in a solution containing a phytosterol, a tocopherol and at least one kind of food emulsifier selected from the group consisting of a glycerin fatty acid ester, a sorbitan fatty acid ester and a propylene glycol fatty acid ester. Based on this finding, the present inventors completed the present invention.

That is, the present invention provides the following preparation and method:
1. an L-ascorbyl fatty acid ester-containing preparation comprising (A) an L-ascorbyl fatty acid ester in an amount ranging from 0.5 to 5 mass %, (B) a phytosterol in an amount ranging from 5 to 20 mass %, (C) a tocopherol in an amount ranging from 20 to 94.4 mass % in total, and (D) at least one kind of food emulsifier selected from the group consisting of a glycerin fatty acid ester, a sorbitan fatty acid ester and a propylene glycol fatty acid ester, the at least one kind of food emulsifier being present in an amount ranging from 0.1 to 10 mass %, based on the total mass of the preparation equaling 100%;
2. a method for enriching oil and/or fat or for enriching high fat-containing food with vitamin-C, which comprises addition of the L-ascorbyl fatty acid ester-containing preparation to oil and/or fat or to fat-containing food; and
3. a method for preventing oxidation of oil and/or fat, comprising addition of the L-ascorbyl fatty acid ester-containing preparation to oil and/or fat.

### EFFECT OF THE INVENTION

The L-ascorbyl fatty acid ester-containing preparation of the present invention is a clear liquid with excellent fluidity and is free from any visible turbidity, precipitate or the like attributed to crystal deposition. Even throughout 6-month storage at room temperature (about 0 to 30°C), the L-ascorbyl fatty acid ester-containing preparation has no crystal deposits, and is kept in a stably dissolved state.

### BEST MODE FOR CARRYING OUT THE INVENTION

### (I) Composition of the preparation

The L-ascorbyl fatty acid ester-containing preparation of the present invention comprises (A) an L-ascorbyl fatty acid ester, (B) a phytosterol, (C) a tocopherol and (D) at least one kind of food emulsifier selected from the group consisting of a glycerin fatty acid ester, a sorbitan fatty acid ester and a propylene glycol fatty acid ester.

Examples of the (A) L-ascorbyl fatty acid ester used in the present invention include L-ascorbyl stearate (food additive) and L-ascorbyl palmitate (food additive). L-ascorbyl palmitate is preferably used due to its relatively low melting point.

The (B) phytosterol used in the present invention is not particularly limited as long as it belongs to sterols of plant origin, generally called phytosterols. The examples include campesterol, sitosterol, stigmasterol, isofucosterol, brassicasterol, gramisterol, citrostadienol, obtusifoliol, cycloeucalenol and cycloartenol. According to the present invention, these sterols may be used alone or in any combination of two or more kinds.

Examples of the (C) tocopherol used in the present invention include dl-α-tocopherol (food additive), d-α-tocopherol (food additive) and extracted tocopherol, and extracted tocopherol is preferred.

The extracted tocopherol is not particularly limited as long as it is reclaimed from deodorizer distillates such as scum, sludge, hotwell residual oil or other by-products during deodorization process in refining vegetable oils. Examples of the extracted tocopherol include a mixture containing one or more tocopherols (α-, β-, γ- and/or δ-tocopherols) and/or one or more tocotrienols (α- β-, γ- and/or δ-tocotrienols), which are tocopherol homologues, the mixture being obtained by separation and purification from deodorizer distillate of, for example, canola oil, sesame oil, rice oil, safflower oil, soybean oil, corn oil, rapeseed oil, palm oil, sunflower oil, cottonseed oil, peanut oil, etc. The total content of tocopherols in the mixture is preferably about 34 mass % or more, and most preferably about 68 mass % or more.

Some commercially available tocopherol products contain oil and/or fat, and tocopherols in such a form can also be used without any problem in the present invention.

The (D) food emulsifier used in the present invention is at least one kind selected from the group consisting of a glycerin fatty acid ester (food additive), a sorbitan fatty acid ester (food additive) and a propylene glycol fatty acid ester (food additive). Inter alia, a sorbitan fatty acid ester is preferred. Sucrose fatty acid esters are not preferred for use in the present invention because they increase the viscosity of the preparation and considerably deteriorate the fluidity of the preparation particularly at low temperature. Further, considering the case where the preparation of the present invention is added to tempura cooking oil or the like, lecithin is not preferred for use in the present invention due to its browning at high temperature.

The constituent fatty acid of the glycerin fatty acid ester, the sorbitan fatty acid ester and the propylene glycol fatty acid ester is not particularly limited as long as it is derived from edible animal or vegetable oils and fats. Examples of the constituent fatty acid include straight-chain saturated fatty acids having 6 to 24 carbon atoms (for example, caproic acid, caprylic acid, capric acid, lauric acid, myristic acid, palmitic acid, stearic acid, arachidic acid, behenic acid, lignoceric acid, etc.), and straight-chain unsaturated fatty acids having 6 to 24 carbon atoms (for example, palmitoleic acid, oleic acid, elaidic acid, linoleic acid, γ-linolenic acid, α-linolenic acid, arachidonic acid, ricinoleic acid, condensed ricinoleic acid, etc.). Saturated fatty acids are preferred, and saturated fatty acids having 16 to 18 carbon atoms are more preferred.

The L-ascorbyl fatty acid ester-containing preparation of the present invention is produced from the above various kinds of ingredients. It is preferable that the content of the (A) L-ascorbyl fatty acid ester is about 0.5 to 5 mass %, the content of the (B) phytosterol is about 5 to 20 mass %, the content of the (C) tocopherol is about 20 to 94.4 mass % in total, and the content of the (D) food emulsifier is about 0.1 to 10 mass %, most preferably about 0.5 to 3 mass %, based on the total mass of the preparation equaling 100%.

Oil can be added and blended into the preparation of the present invention to the extent that the addition does not impair the properties required for the objective preparation. Examples of the oil to be used in the present invention include processed edible oils such as olive oil, canola oil, sesame oil, rice oil, safflower oil, soybean oil, corn oil, rapeseed oil, sunflower oil, cottonseed oil and peanut oil. Among them, preferred are edible vegetable oils that meet the requirement of the cooling test prescribed by Japanese Agricultural Standard (JAS). According to the present invention, these oils may be used alone or in any combination of two or more kinds. The content of the oil is usually about 50 mass % or less, and preferably about 20 mass % or less based on the total mass of the preparation equaling 100%.

### (II) Production method of the preparation

The production method of the preparation of the present invention is not particularly limited and can be a method known per se. A preferable production method of the preparation is illustrated by way of an example below. For example, phytosterol, tocopherol and food emulsifier are put into an ordinary stirring/mixing tank provided with a mixer, a heating jacket, a baffle plate, etc., the mixture is heated to about 100 to 160°C and then all are dissolved to make a solution. The mixer to be used may be a general-purpose mixer equipped with a propeller-type stirring blade, or may be a high speed rotating disperser/emulsifier, such as TK HOMO MIXER (manufactured by PRIMIX Corporation) or CLEARMIX (manufactured by M Technique Co., Ltd.). Next, while the resulting solution is kept at a temperature of about 70°C or higher, preferably about 80 to 120°C, L-ascorbyl fatty acid ester is added thereto with stirring and then dissolved. The series of procedures should be performed at a stirring speed of about 4000 to 8000 rpm for a stirring period of about 0.5 to 3 hours. After complete dissolution of the L-ascorbyl fatty acid ester, the solution is then cooled down to room temperature. Thus, the L-ascorbyl fatty acid ester-containing preparation of the present invention is obtained.

In the aforementioned production method, oil may be added when phytosterol, tocopherol and food emulsifier are heat-dissolved, or may be added to the solution obtained by dissolving L-ascorbyl fatty acid ester in the heat-dissolved solution of phytosterol, tocopherol and food emulsifier.

The resulting preparation of the present invention is a clear liquid with excellent fluidity and is free from any visible turbidity, precipitate or the like attributed to crystal deposition. Even throughout long-term storage at room temperature (about 0 to 30°C), the L-ascorbyl fatty acid ester-containing preparation has no white turbidity, precipitates or the like, and is kept in a stably dissolved state.

### (III) Method for use of the preparation

In order to enrich oil and/or fat or to enrich fat-containing food with vitamin-C, the L-ascorbyl fatty acid ester-containing preparation of the present invention is preferably added thereto in amount of about 200 to 400 ppm in terms of L-ascorbic acid. In order to prevent oxidation of oil and/or fat, the preparation of the present invention is preferably added thereto in an amount of about 30 to 200 ppm in terms of L-ascorbic acid.

### EXAMPLES

Hereinafter, the present invention will be illustrated in detail by way of examples, but is not limited thereto.

### Example 1

### Production of L-ascorbyl fatty acid ester-containing preparations

### (1) Ingredients for production of preparations

1) L-ascorbyl palmitate (manufactured by DSM Nutrition Japan K.K.)
2) Phytosterol (trade name: Riken Phytosterol; manufactured by Riken Vitamin Co., Ltd.)
3) Tocopherol A (trade name: Riken E-Oil 600; manufactured by Riken Vitamin Co., Ltd. ; the total content of tocopherols is ≥ about 51 mass %.)
4) Tocopherol B (trade name: EMix D; manufactured by Eisai Co., Ltd.; the total content of tocopherols is ≥ about 96 mass %.)
5) Sorbitan fatty acid ester (trade name: Poem S-60V; manufactured by Riken Vitamin Co., Ltd.)
6) Soybean refined oil (manufactured by J-OIL MILLS, Inc.)

### (2) Composition of preparations

The ingredient compositions of the L-ascorbyl fatty acid ester-containing preparations (Preparations 1 to 12) produced from the aforementioned ingredients are shown in Tables 1 and 2. Preparations 1 to 4 are examples of the present invention, and their comparative examples are Preparations 5 to 12.

**Table 1**

| Examples of the present invention | | | | |
|---|---|---|---|---|
| | P1 | P2 | P3 | P4 |
| L-ascorbyl palmitate | 0.5 | 0.5 | 5 | 5 |
| Phytosterol | 5 | 10 | 10 | 20 |
| Tocopherol A | | 40 | 79 | |
| Tocopherol B | 94.4 | | | 63 |
| Sorbitan fatty acid ester | 0.1 | 0.5 | 1 | 2 |
| Soybean refined oil | | 49 | 5 | 10 |
| Total | 100 | 100 | 100 | 100 |

| | | | | |
|---|---|---|---|---|
| P1 to P4 indicate Preparations 1 to 4, respectively. The units for the values in the above table are mass %. | | | | |

**Table 2**

| Comparative examples | | | | | | | | |
|---|---|---|---|---|---|---|---|---|
| | P5 | P6 | P7 | P8 | P9 | P10 | P11 | P12 |
| L-ascorbyl palmitate | 0.5 | 0.5 | 0.5 | 0.5 | 5 | 5 | 5 | 5 |
| Phytosterol | | 5 | | 10 | | 10 | | 20 |
| Tocopherol A | | | 40 | | 79 | | | |
| Tocopherol B | 94.4 | | | | | | 63 | |
| Sorbitan fatty acid ester | 0.1 | 0.1 | 0.5 | 0.5 | 1 | 1 | 2 | 2 |
| Soybean refined oil | 5 | 94.4 | 59 | 89 | 15 | 84 | 30 | 73 |
| Total | 100 | 100 | 100 | 100 | 100 | 100 | 100 | 100 |

| | | | | | | | | |
|---|---|---|---|---|---|---|---|---|
| P5 to P12 indicate Preparations 5 to 12, respectively. The units for the values in the above table are mass %. | | | | | | | | |

### (3) Production of preparations

Based on the compounding ratios shown in Tables 1 and 2, the ingredients for each preparation, except for L-ascorbyl palmitate, were put into a 500 mL-beaker. Each mixture was heated to about 130°C with stirring at 300 rpm using the Three-One Motor (model: FBL-600; manufactured by HEIDON, blade diameter: 35 mm), and then all were dissolved. Next, each resulting solution was cooled to about 100°C, and based on the compounding ratio shown in Tables 1 and 2, L-ascorbyl palmitate was added thereto and then dissolved. After a homogeneous solution resulted, each solution was cooled to room temperature. Thus, the L-ascorbyl fatty acid ester-containing preparations (Preparations 1 to 12) were obtained. The total amount of each preparation was set to 300 g.

### Stability evaluation

### (1) The conditions of preparations immediately after the production

The conditions of the L-ascorbyl fatty acid ester-containing preparations (Preparations 1 to 12) were observed with the naked eye immediately after the production. Further, the presence or absence of crystals was determined with an optical microscope (model: BX50; manufactured by Olympus Corporation), and if any visible crystals were present, the maximum among the diameters of the crystals present was measured. The detection limit of the microscope is 0.3 µm. The results are shown in Table 3.

**Table 3**

| The conditions of preparations immediately after production | | | |
|---|---|---|---|
| | Preparation | Naked-eye observation | Microscopic observation |
| Examples of the present invention | P1 | Clear | No crystals |
| | P2 | Clear | No crystals |
| | P3 | Clear | No crystals |
| | P4 | Clear | No crystals |
| Comparative examples | P5 | Clear | No crystals |
| | P6 | Clear | No crystals |
| | P7 | Clear | No crystals |
| | P8 | Clear | No crystals |
| | P9 | Clear | No crystals |
| | P10 | Clear | No crystals |
| | P11 | Clear | No crystals |
| | P12 | Clear | No crystals |

| | | | |
|---|---|---|---|
| P1 to P12 are as defined above. | | | |

As clearly shown in Table 3, immediately after the production, each preparation was clear solution, and there was no difference between the preparations according to examples of the invention and the comparative examples.

### (2) The conditions of preparations after one-month storage at room temperature

After the production, 250 g of the L-ascorbyl fatty acid ester-containing preparations (Preparations 1 to 12) were put separately into 500 mL wide mouthed glass bottles. After the headspace in the bottles was filled with nitrogen gas, the bottles were sealed and then stored at room temperature. At one month from the start of the test, the condition of each preparation was observed with the naked eye. Further, the presence or absence of crystals was determined with an optical microscope (model: BX50; manufactured by Olympus Corporation), and if any visible crystals were present, the maximum among the diameters of the crystals present was measured. The results are shown in Table 4.

**Table 4**

| The conditions of preparations after one-month storage at room temperature | | | |
|---|---|---|---|
| | Preparation | Naked-eye observation | Microscopic observation |
| Examples of the present invention | P1 | Clear | No crystals |
| | P2 | Clear | No crystals |
| | P3 | Clear | No crystals |
| | P4 | Clear | No crystals |
| Comparative examples | P5 | Crystal deposition | 36µm |
| | P6 | Crystal deposition | 38µm |
| | P7 | Crystal deposition | 38µm |
| | P8 | Crystal deposition | 38µm |
| | P9 | Crystal deposition | 40µm |
| | P10 | Crystal deposition | 42µm |
| | P11 | Crystal deposition | 42µm |
| | P12 | Crystal deposition | 40µm |

| | | | |
|---|---|---|---|
| P1 to P12 are as defined above. | | | |

As clearly shown in Table 4, even after one-month storage at room temperature, each preparation according to examples of the invention was clear solution and was kept in the same condition as immediately after the production, while each preparation of the comparative examples had visible crystal deposits.

### (3) The conditions of preparations after 3-month storage at room temperature

After the production, 250 g of the L-ascorbyl fatty acid ester-containing preparations (Preparations 1 to 4) were put separately into 500 mL wide mouthed glass bottles. After the headspace in the bottles was filled with nitrogen gas, the bottles were sealed and then stored at room temperature. At 3 months from the start of the test, the condition of each preparation was observed with the naked eye. Further, the presence or absence of crystals was determined with an optical microscope (model: BX50; manufactured by Olympus Corporation), and if any visible crystals were present, the maximum among the diameters of the crystals present was measured. The results are shown in Table 5.

**Table 5**

| The conditions of preparations after 3-month storage at room temperature | | | |
|---|---|---|---|
| | Preparation | Naked-eye observation | Microscopic observation |
| Examples of the present invention | P1 | Clear | No crystals |
| | P2 | Clear | No crystals |
| | P3 | Clear | No crystals |
| | P4 | Clear | No crystals |

| | | | |
|---|---|---|---|
| P1 to P4 are as defined above. | | | |

As clearly shown in Table 5, even after 3-month storage at room temperature, each preparation according to examples of the invention was clear solution and was kept in the same condition as immediately after the production.

### (4) The conditions of preparations after 6-month storage at room temperature

After the production, 250 g of the L-ascorbyl fatty acid ester-containing preparations (Preparations 1 to 4) were put separately into 500 mL wide mouthed glass bottles. After the headspace in the bottles was filled with nitrogen gas, the bottles were sealed and then stored at room temperature. At 6 months from the start of the test, the condition of each preparation was observed with the naked eye. Further, the presence or absence of crystals was determined with an optical microscope (model: BX50; manufactured by Olympus Corporation), and if any visible crystals were present, the maximum among the diameters of the crystals present was measured. The results are shown in Table 6.

**Table 6**

| The conditions of preparations after 6-month storage at room temperature | | | |
|---|---|---|---|
| | Preparation | Naked-eye observation | Microscopic observation |
| Examples of the present invention | P1 | Clear | No crystals |
| | P2 | Clear | No crystals |
| | P3 | Clear | No crystals |
| | P4 | Clear | No crystals |

| | | | |
|---|---|---|---|
| P1 to P4 are as defined above. | | | |

As clearly shown in Table 6, even after 6-month storage at room temperature, each preparation according to examples of the invention was clear solution and was kept in the same condition as immediately after the production.

### Example 2

### Production of L-ascorbyl fatty acid ester-containing preparations

### (1) Ingredients for production of preparations

1) L-ascorbyl palmitate (manufactured by DSM Nutrition Japan K.K.)
2) Phytosterol (trade name: Riken Phytosterol; manufactured by Riken Vitamin Co., Ltd.)
3) Tocopherol (trade name: Riken E-Oil 600; manufactured by Riken Vitamin Co., Ltd.; the total content of tocopherols is ≥ about 51 mass %.)
4) Glycerin fatty acid ester (trade name: Type P(V); manufactured by Riken Vitamin Co., Ltd.)
5) Sorbitan fatty acid ester (trade name: Poem S-60V; manufactured by Riken Vitamin Co., Ltd.)
6) Propylene glycol fatty acid ester (trade name: Rikemal PS-100; manufactured by Riken Vitamin Co., Ltd.)
7) Soybean refined oil (manufactured by J-OIL MILLS, Inc.)

### (2) Composition of preparations

The ingredient compositions of the L-ascorbyl fatty acid ester-containing preparations (Preparations 13 to 17) produced from the aforementioned ingredients are shown in Table 7. Preparations 13 to 17 are examples of the present invention.

**Table 7**

| Examples of the present invention | | | | | |
|---|---|---|---|---|---|
| | P13 | P14 | P15 | P16 | P17 |
| L-ascorbyl palmitate | 1.5 | 1.5 | 1.5 | 1.5 | 1.5 |
| Phytosterol | 10 | 10 | 10 | 10 | 10 |
| Tocopherol | 78 | 78 | 78 | 78 | 78 |
| Glycerin fatty acid ester | 0.5 | | | | |
| Sorbitan fatty acid ester | | 0.5 | | 5 | 10 |
| Propylene glycol fatty acid ester | | | 0.5 | | |
| Soybean refined oil | 10 | 10 | 10 | 5.5 | 0.5 |
| Total | 100 | 100 | 100 | 100 | 100 |

| | | | | | |
|---|---|---|---|---|---|
| P13 to P17 indicate Preparations 13 to 17, respectively. The units for the values in the above table are mass %. | | | | | |

### (3) Production of preparations

Except that compounding ratios are based on those shown in Table 7, the same procedures as described in Example 1 were performed to give the L-ascorbyl fatty acid ester-containing preparations (Preparations 13 to 17).

### Stability evaluation

### (1) The conditions of the preparations immediately after the production

The conditions of the L-ascorbyl fatty acid ester-containing preparations (Preparations 13 to 17) were observed with the naked eye immediately after the production. Further, the presence or absence of crystals was determined with an optical microscope (model: BX50; manufactured by Olympus Corporation), and if any visible crystals were present, the maximum among the diameters of the crystals present was measured. The detection limit of the microscope is 0.3 µm. The results are shown in Table 8.

**Table 8**

| The conditions of preparations immediately after production | | | |
|---|---|---|---|
| | Preparation | Naked-eye observation | Microscopic observation |
| Examples of the present invention | P13 | Clear | No crystals |
| | P14 | Clear | No crystals |
| | P15 | Clear | No crystals |
| | P16 | Clear | No crystals |
| | P17 | Clear | No crystals |

| | | | |
|---|---|---|---|
| P13 to P17 are as defined above. | | | |

As clearly shown in Table 8, each preparation according to examples of the invention was clear solution.

### (2) The conditions of preparations after one-month storage at room temperature

After the production, the L-ascorbyl fatty acid ester-containing preparations (Preparations 13 to 17) were stored at room temperature for one month in the same manner as in Example 1. Following this, the presence or absence of crystals in each preparation was observed with the naked eye and the optical microscope. The results are shown in Table 9.

**Table 9**

| The conditions of preparations after one-month storage at room temperature | | | |
|---|---|---|---|
| | Preparation | Naked-eye observation | Microscopic observation |
| Examples of the present invention | P13 | Clear | No crystals |
| | P14 | Clear | No crystals |
| | P15 | Clear | No crystals |
| | P16 | Clear | No crystals |
| | P17 | Clear | No crystals |

| | | | |
|---|---|---|---|
| P13 to P17 are as defined above. | | | |

As clearly shown in Table 9, even after one-month storage at room temperature, each preparation according to examples of the invention was clear solution and was kept in the same condition as immediately after the production.

### (3) The conditions of preparations after 3-month storage at room temperature

After the production, the L-ascorbyl fatty acid ester-containing preparations (Preparations 13 to 17) were stored at room temperature for 3 months in the same manner as in Example 1. Following this, the condition of each preparation was observed with the naked eye and the optical microscope. The results are shown in Table 10.

**Table 10**

| The conditions of preparations after 3-month storage at room temperature | | | |
|---|---|---|---|
| | Preparation | Naked-eye observation | Microscopic observation |
| Examples of the present invention | P13 | Clear | No crystals |
| | P14 | Clear | No crystals |
| | P15 | Clear | No crystals |
| | P16 | Clear | No crystals |
| | P17 | Clear | No crystals |

| | | | |
|---|---|---|---|
| P13 to P17 are as defined above. | | | |

As clearly shown in Table 10, even after 3-month storage at room temperature, each preparation according to examples of the invention was clear solution and was kept in the same condition as immediately after the production.

### (4) The conditions of preparations after 6-month storage at room temperature

After the production, the L-ascorbyl fatty acid ester-containing preparations (Preparations 13 to 17) were stored at room temperature for 6 months in the same manner as in Example 1. Following this, the condition of each preparation was observed with the naked eye and the optical microscope. The results are shown in Table 11.

**Table 11**

| The conditions of preparations after 6-month storage at room temperature | | | |
|---|---|---|---|
| | Preparation | Naked-eye observation | Microscopic observation |
| Examples of the present invention | P13 | Clear | No crystals |
| | P14 | Clear | No crystals |
| | P15 | Clear | No crystals |
| | P16 | Clear | No crystals |
| | P17 | Clear | No crystals |

| | | | |
|---|---|---|---|
| P13 to P17 are as defined above. | | | |

As clearly shown in Table 11, even after 6-month storage at room temperature, each preparation according to examples of the invention was clear solution and was kept in the same condition as immediately after the production.

### INDUSTRIAL APPLICABILITY

The L-ascorbyl fatty acid ester-containing preparation of the present invention is excellent in preservation stability and is used as an additive such as a nutritional enrichment ingredient or an antioxidant in the production process of oil and/or fat, fat-containing food, pharmaceuticals or cosmetics.

## Claims

1. An L-ascorbyl fatty acid ester-containing preparation comprising (A) an L-ascorbyl fatty acid ester in an amount ranging from 0.5 to 5 mass %, (B) a phytosterol in an amount ranging from 5 to 20 mass %, (C) a tocopherol in an amount ranging from 20 to 94.4 mass % in total, and (D) at least one kind of food emulsifier selected from the group consisting of a glycerin fatty acid ester, a sorbitan fatty acid ester and a propylene glycol fatty acid ester, the at least one kind of food emulsifier being present in an amount ranging from 0.1 to 10 mass %, based on the total mass of the preparation equaling 100%.

## Patentansprüche

1. L-Ascorbylfettsäureester-enthaltendes Präparat, umfassend (A) einen L-Ascorbylfettsäureester in einer Menge im Bereich von 0,5 bis 5 Masse-%, (B) ein Phytosterol in einer Menge im Bereich von 5 bis 20 Masse-%, (C) ein Tocopherol in einer Menge im Bereich von 20 bis 94,4 Masse-% insgesamt und (D) mindestens eine Art Nahrungsmittelemulgator, ausgewählt aus der Gruppe, bestehend aus einem Glycerinfettsäureester, einem Sorbitanfettsäureester und einem Propylenglycolfettsäureester, wobei die mindestens eine Art des Nahrungsmittelemulgators in einer Menge im Bereich von 0,1 bis 10 Masse-%, basierend auf der Gesamtmasse des Präparates, die 100 % entspricht, vorliegt.

## Revendications

1. Préparation contenant un ester d'acide gras L-ascorbylique comprenant(A) un ester d'acide gras L-ascorbylique dans une quantité comprise entre 0,5 et 5 % en poids, (B) un phytostérol dans une quantité comprise entre 5 et 20% en poids, (C) un tocophérol dans une quantité comprise entre 20 et 94,4% en poids au total, et (D) au moins une espèce d'émulsifiant alimentaire sélectionné dans le groupe constitué d'un ester d'acide gras de glycérine, d'un ester d'acide gras de sorbitan et d'un ester d'acide gras de propylène glycol, le au moins une espèce d'émulsifiant alimentaire étant présent dans une quantité comprise entre 0,1 et 10 % en poids, sur la base du poids total de la préparation équivalent à 100%.
